# EUROPÄISCHE PATENTSCHRIFT

(11) **EP 4 505 863 B1**
(45) Veröffentlichungstag und Bekanntmachung des Hinweises auf die Patenterteilung: **14.10.2026**
(21) Anmeldenummer: 24183938.0
(22) Anmeldetag: 24.06.2024
(51) Int. Cl.: A01D 90/04

(54) **MESSER FÜR EINE LANDWIRTSCHAFTLICHE MASCHINE**
BLADE FOR AN AGRICULTURAL MACHINE
COUTEAU POUR MACHINE AGRICOLE

(30) Priorität: 11.08.2023 AT 506462023
(43) Veröffentlichungstag der Anmeldung: 12.02.2025
(73) Patentinhaber: BOEHLERIT GmbH & Co.KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(56) Entgegenhaltungen:
- EP-A1- 3 539 368
- EP-A1- 3 701 781
- US-A- 4 532 708

## Beschreibung

Die Erfindung betrifft ein Messer für Maschinen für die Landwirtschaft, beispielsweise Erntemaschinen, insbesondere ein Pressenmesser oder Ladewagenmesser, umfassend einen im Wesentlichen flach ausgebildeten Grundkörper mit einem insbesondere gebogenen Schneidbereich, in dem bei feststehendem Grundkörper ein Schnitt von Heu oder dergleichen erfolgt.

In der Landwirtschaft werden zur Verarbeitung von Stroh und Heu in verschiedenen landwirtschaftlichen Maschinen Messer eingesetzt, die stirnseitig einen Schneidbereich aufweisen. Die entsprechenden Messer, beispielsweise Pressenmesser oder Ladewagenmesser, sind in der Regel im Wesentlichen flach ausgebildet und werden innerhalb der landwirtschaftlichen Maschine feststehend angeordnet. Zumeist liegt eine Vielzahl derartiger Messer in einer Anordnung vor, durch welche das zu schneidende Gut gedrückt wird. Dadurch kann beispielsweise bereits geschnittenes Heu noch weiter auf eine gewünschte Größe zerkleinert werden.

Entsprechend feststehend eingesetzte Messer unterliegen wie allgemein Schneidwerkzeuge einem Verschleiß. Man ist selbstverständlich bemüht, den Verschleiß möglichst zu minimieren. Je geringer ein Verschleiß ist, umso weniger oft muss ein Messer beispielsweise durch Schleifen nachbearbeitet oder gar getauscht werden. Je weniger Wartungs- und/oder Austauschaufwand erforderlich ist, desto besser kann ein Messer pro Zeit genutzt werden, was die Produktivität erhöht.

Aus den vorstehenden Überlegungen heraus hat sich in den letzten Jahren bei Schneidwerkzeugen für die Landwirtschaft, beispielsweise Bodenbearbeitungsgeräten wie Gänsefußschare oder dergleichen, ein neuer Trend entwickelt, nämlich entsprechende Schneidwerkzeuge, die aus Stahl gefertigt sind, im schneidaktiven Bereich mit Hartmetalleinsätzen zu bestücken. Derartige Hartmetalleinsätze, die in der Regel aus einem oder mehreren Metallcarbiden wie beispielsweise Wolframcarbid und einem oder mehreren Bindemetallen, üblicherweise ausgewählt aus der Gruppe besteht aus Cobalt, Nickel und Eisen, gebildet sind, müssen zwar gesondert hergestellt sowie am Stahlträger angebracht werden und sind darüber hinaus von den Grundmaterialien her teurer als Stahl, allerdings gehen mit derartigen Hartmetalleinsätzen so große

Standzeitverlängerungen einher, dass sich sowohl die zusätzlichen Arbeitsschritte als auch die höheren Materialkosten in Bezug auf eine längere Standzeit rechnen. Messer sind z.B. aus den folgenden Dokumenten bekannt: EP 3 539 368 A1 und EP 3 701 781 A1.

Ausgehend vom Stand der Technik ist es Aufgabe der Erfindung, ein Messer der eingangs genannten Art derart weiterzubilden, dass im Einsatz eine erhöhte Standzeit erreichbar ist.

Diese Aufgabe wird gelöst durch ein Messer nach dem unabhängigen Anspruch 1. Vorteilhafte Ausgestaltungen sind den abhängigen Ansprüchen zu entnehmen.

Durch die vorgesehene Anordnung der Schneidplatten im Schneidbereich des Grundkörpers kann eine Erhöhung der Standzeit des Messers bei gleichzeitig guter Schnittqualität erreicht werden. Dabei sind die Schneidplatten in Draufsicht auf die Oberseite des Grundkörpers verdreht angeordnet. Die Verdrehung ist so gewählt, dass die zweite Ecke einer Schneidplatte hinter einer Verbindungslinie liegt, welche durch die ersten Ecken der Schneidplatten gebildet wird. Üblicherweise liegen alle zweiten Ecken der Schneidplatten hinter dieser Verbindungslinie. Durch dieses Andrehen der Schneidplatten im eigentlichen Schneidbereich ergibt sich, dass in Draufsicht auf die Oberseite betrachtet bei einem Messer der eingangs genannten Art alternativ ausgedrückt entlang einer Anzahl von Schneidplatten zu einer Außenseite hin die erste Ecke einer Schneidplatte vor der zweiten Ecke einer nachfolgenden Schneidplatte liegt. Dieses Andrehen der Schneidplatten hat somit einen Versatz am Übergang von einer Schneidplatte zur darauffolgenden zur Folge. Zu schneidendes Gut, welches von einer Schneidplatte abgeleitet, kann sich somit auf einer der darauffolgende Schneidplatten verfangen und kann dann von dieser geschnitten werden. Entlang einer Kette von Schneidplatten wiederholen sich diese Rücksprünge, sodass das zu schneidende Gut auch dann geschnitten werden kann, wenn dieses beispielsweise aufgrund der Beschaffenheit dazu tendiert, nach außen hin zu gleiten und dadurch dem Messer auszuweichen.

Die Schneidplatten sind grundsätzlich in Draufsicht mit einer Stirnseite sowie einer Rückseite ausgebildet, wobei Stirnseite und Rückseite durch zwei Breitseiten verbunden sind. Die Stirnseite und die einzelnen Breitseiten definieren die erste Ecke und die zweite Ecke einer Schneidplatte. Es ist nicht zwingend, grundsätzlich aber vorgesehen, dass alle eingesetzten Schneidplatten dieselbe Form aufweisen. Stirnseitig können die Schneidplatten mit bestimmten Konturen ausgebildet sein, welche sich insbesondere in Bezug auf ein Schneiden von Stroh, Heu oder dergleichen als besonders zweckmäßig erwiesen haben. Beispielsweise können die Schneidplatten mit einer Stirnseite ausgebildet sein, welche eine Vielzahl von Zähnen aufweist, zwischen welchen die eigentlichen Schneidbereiche der Schneidplatten durch rückspringende Spanflächen samt Schneidlinien definiert werden. Die rückspringenden Schneidlinien können in Draufsicht u-förmig oder v-förmig ausgebildet sein.

Für die Schneidplatten kommt in der Regel bekanntes Hartmetall zum Einsatz. Beispielsweise können Hartmetallsorten mit Wolframcarbid als Hartstoff sowie Cobalt als Bindemetall verwendet werden, wobei Wolframcarbid teilweise durch Titancarbid ersetzt sein kann und das Bindemetall gegebenenfalls auch Nickel- und/oder Eisenanteile umfassen kann. Typischerweise umfasst das Hartmetall mehr als 80 % Wolframcarbid, beispielsweise 85 % bis 95 % Wolframcarbid, Rest Bindemetall, beispielsweise Cobalt im Bereich von etwa 6 % bis 12 %. Alle Angaben, sofern nicht anders angegeben, beziehen sich auf Gewichtsprozent.

Eine Anzahl der Schneidplatten wird mit Vorteil so gewählt, dass der Schneidbereich des Grundkörpers mit etwa 4 bis 10, vorzugsweise 5 bis 8 Schneidplatten im Wesentlichen vollständig bestückt werden kann. Dadurch wird eine ausreichende Anzahl an Rücksprüngen durch die Verdrehung der Schneidplatten erreicht. Eine geringere Anzahl an Schneidplatten ist diesbezüglich wenig zweckmäßig. Wenngleich auch mehr als zehn Schneidplatten zur Abdeckung des Schneidbereiches verwendet werden können, ist dies weniger effizient, da damit ein Mehraufwand in Bezug auf die Gestaltung des Grundkörpers mit Plattensitzen einerseits und die Anbringung der Schneidplatten andererseits einhergeht.

Der Schneidbereich des Grundkörpers, auf dem die Schneidplatten angeordnet werden, ist in der Regel gebogen ausgeführt, wenngleich dieser Bogen im Extremfall in eine Gerade übergehen kann. Insbesondere kann vorgesehen sein, dass die ersten Ecken auf einem Kreisbogen angeordnet sind. In diesem Fall fällt die Verbindungslinie mit dem Kreisbogen, welcher einen bestimmten Radius aufweist, zusammen. Es kann aber auch vorgesehen sein, dass der gebogene Schneidbereich aus ineinander übergehenden Kreisbögen mit unterschiedlichen Radien besteht.

Mit Vorteil ist vorgesehen, dass die Schneidplatten in Draufsicht auf die Oberseite des Grundkörpers um einen Winkel von bis zu 15°, beispielsweise mehr als 0° bis 10°, vorzugsweise 1° bis 9°, insbesondere 2° bis 8°, relativ zur Verbindungslinie verdreht sind. Der entsprechende Winkel ergibt sich aus dem Winkel zwischen einer Stirnseite einer bestimmten Schneidplatte und der Verbindungslinie zur ersten Ecke einer zur Innenseite hin nachfolgenden Schneidplatte. Für die innenseitig erste Schneidplatte existiert kein entsprechender Winkel. Eine Verdrehung um einen Winkel von bis zu 15° können die erwünschten Wirkungen einer hohen Standzeit bei gleichzeitig guter Schnittqualität erhalten werden. Vorzugsweise beträgt der entsprechende Winkel mehr als 0° bis 10°, vorzugsweise 1° bis 9°, insbesondere bevorzugt 2° bis 8°. Ein gewisser Mindestwinkel ist gewünscht, um den beabsichtigten Übergang von einer Schneidplatte zur außenseitig hin betrachtet nächsten Schneidplatte zu haben. Besonders große Winkel erschweren ein Anschleifen der Schneidplatten, welches später noch erläutert wird. Insofern stellen die erwähnten bevorzugten Winkelangaben Optimierungen in Bezug auf diese Eigenschaften dar.

Geometrisch betrachtet sind die Schneidplatten derart angeordnet, dass die ersten Ecken näher zu einer Außenseite des Grundkörpers und die zweiten Ecken näher zu einer Innenseite des Grundkörpers liegen. Dadurch ist definiert, dass von der Innenseite zur Außenseite betrachtet die ersten Ecken der Schneidplatten außenseitig liegen und die zweiten Ecken der Schneidplatten innenseitig liegen. Durch diese Anordnung wird gewährleistet, dass von einer Schneidplatte zur nächsten eine Abstufung bzw. ein Rücksprung vorliegt und so das zu schneidende Gut quasi entlang des gesamten Schneidbereiches immer wieder von Schneidplatten erfasst werden kann, sofern es nicht von einer der vorhergehenden Schneidplatten bereits durchtrennt wurde.

Erfindungsgemäß sind die Schneidplatten in stirnseitiger Ansicht auf die Schneidkanten schräg angeordnet, wobei die erste Ecke einer Schneidplatte höher als die zweite Ecke dieser Schneidplatte liegt. Dies ist dadurch begründet, dass die Schneidplatten vor dem Einsatz und gegebenenfalls auch im Rahmen einer Wartung von unten angeschliffen werden müssen. Durch die Schrägstellung der Schneidplatten liegen die ersten Enden aus Sicht eines Schleifkegels, der entlang des Schneidbereiches geführt wird, deutlich vor den zweiten Ecken. Wenn somit im Bereich der zweiten Ecken zu den ersten Ecken hin die Schneidplatte geschliffen werden soll, würde dies bei einer horizontalen Ausrichtung der Schneidplatten entsprechend den im Wesentlichen flachen Grundkörper dazu führen, dass im Bereich der ersten Ecken der Schneidplatten ein Großteil der Schneidplatte durch das Schleifen abgenommen werden würde. Durch die vorgesehene weitere Schrägstellung der Schneidplatten, diesmal in Bezug auf die Höhe oder aus Grundkörperebene betrachtet die z-Achse, kann dies optimal ausgeglichen werden. Gleichzeitig hat dies weder einen Einfluss auf die Standzeit noch die Schnittqualität.

Der entsprechende Winkel einer Schrägstellung der Schneidplatten kann bis zu 25° betragen, vorzugsweise bis zu 17,5°, insbesondere bis zu 15°, beispielsweise 7,5° bis 12,5°. Eine größere Schrägstellung als 25° ist nicht zum Ausgleich erforderlich. Untere Schwellwerte für die angegebenen Bereiche ergeben sich je nach Geometrie des Grundkörpers und des gebogenen Bereiches als erforderlich, um den gewünschten Ausgleich zu schaffen.

Mit Vorteil sind die Schneidplatten so angeordnet, dass diese in stirnseitiger Ansicht eine zumindest im Wesentlichen durchgehende Schneidlinie bilden. Zwar könnten die Schneidplatten in der entsprechenden Ansicht auch so angeordnet sein, dass diese einen Abstand voneinander aufweisen, allerdings wäre dann der Schneidbereich nicht vollständig ausgenutzt. Darüber hinaus könnte es auch zu Verschleiß des Grundkörpers in den Bereichen zwischen den Schneidplatten kommen. Daher ist eine Ausbildung mit einer Anordnung, wonach die Schneidplatten eine im Wesentlichen durchgehende Schneidlinie bilden, bevorzugt.

Wie erwähnt sind die Schneidplatten aus einem Hartmetall gebildet. Mit Vorteil sind alle Schneidplatten aus demselben Hartmetall gebildet. Dabei können die Schneidplatten wie ausgeführt auch dieselbe Form aufweisen. Es kommen typische Hartmetallsorten zum Einsatz, beispielsweise auf Wolframcarbid basierende Systeme mit mehr als 85 % Wolframcarbid, Rest Cobalt sowie herstellungsbedingte Verunreinigungen, wobei optional ein Teil des Cobalts durch Eisen und/oder Nickel ersetzt sein kann. Auch ein Teil des Wolframcarbids kann ersetzt sein, beispielsweise bis zu 10 % durch weitere Metallcarbide wie Titancarbid. Eine durchschnittliche Größe der Metallcarbidpartikel liegt üblicherweise im Bereich von 0,8 µm bis 3,5 µm. Standard-Methoden zur Bestimmung einer durchschnittlichen Korngröße eines Metallcarbidpulvers sind dem Fachmann bekannt, beispielsweise aus DIN EN ISO 4499-3 2016-10.

Der Grundkörper ist üblicherweise aus einem Stahl gebildet. Damit für einen bereits bekannten Grundkörper eine verbesserte Ausbildung im Sinne der Erfindung erfolgen kann, ist es erforderlich, dass der Grundkörper mit Plattensitzen ausgebildet ist, in welchen die Schneidplatten angeordnet sind. Die Schneidplatten werden am Grundkörper bevorzugt stoffschlüssig, insbesondere durch Löten, angeordnet, und zwar in den vorgesehenen Plattensitzen. Die Plattensitze können dabei so dimensioniert sein, dass diese an einer Rückseite einen Anschlag für eine Schneidplatte ausbilden. Bevorzugt ist vorgesehen, dass die Plattensitze so ausgeformt sind, dass diese im Bereich einer an die erste Ecke anschließenden Breitseite sowie im an diese Breitseite anschließenden Teil der Rückseite angepasste Form aufweisen. Dadurch ist es sehr einfach möglich, eine Schneidplatte beim Anlöten in eine gewünschte Position zu bringen. Dass der Plattensitz im Übrigen insbesondere an der Rückseite einen Abstand aufweist, spielt dann keine Rolle. Besonders bevorzugt ist vorgesehen, dass gleichzeitig auch eine Anlage an der Breitseite gebildet ist, welche an die zweite Ecke der Schneidplatte anschließt. Die Schneidplatte ist dann an den Breitseiten sowie einem Teil der Rückseite, gegebenenfalls auch entlang deren gesamten Länge, durch den Plattensitz gehalten. Es ergibt sich dadurch auch eine einfache Positionierung beim Anlöten sowie eine formschlüssige Fixierung für den Einsatz des Messers.

Die Schneidplatten sind an einer Unterseite vorteilhafterweise geschliffen. Ein Schleifwinkel kann dabei 5° bis 25°, vorzugsweise 7,5° bis 20°, insbesondere 8° bis 18°, betragen. Gleichzeitig mit dem Schleifen der Schneidplatten wird auch ein Teil des Grundkörpers an der Unterseite abgeschliffen, was sich durch die Anordnung der Schneidplatten ergibt. Dies ist auch der Fall, wenn die Schneidplatten geringfügig über die Plattensitze vorstehen. Dass die Schneidplatten in den Plattensitzen geringfügig über den Grundkörper, vorstehen ist im Rahmen der Erfindung bevorzugt. Dadurch lassen sich die Schneidplatten leicht von unten anschleifen. Ein geringer Überstand über den Plattensitz bzw. den Grundkörper beeinträchtigt darüber hinaus nicht die Stabilität der Schneidplatten in den Plattensitzen. Ein Überstand sollte jedoch auf maximal 5 mm begrenzt werden, damit die Schneidplatten in den Plattensitzen stabil gehalten werden. Während des Anlötens und damit auch in der finalen Position ergibt sich dieser Überstand letztlich dadurch, dass die Schneidplatte durch Anschlag in den Plattensitz nicht weiter nach hinten in den Plattensitz verschoben werden kann. Somit ist durch die Form eines Plattensitzes relativ zur Schneidplatte auch definiert, wie weit diese über den Plattensitz bzw. den Grundkörper vorsteht.

Weitere Vorteile, Merkmale und Wirkungen der Erfindung ergeben sich aus dem nachfolgend dargestellten Ausführungsbeispiel. In den Zeichnungen, auf welche dabei Bezug genommen wird, zeigen:
Fig. 1 eine erste Variante eines Ladewagenmessers mit Schneidplatten;
Fig. 2 eine zweite Variante eines Ladewagenmessers mit Schneidplatten;
Fig. 3 eine dritte Variante eines Ladewagenmessers mit Schneidplatten;
Fig. 4 ein Pressenmesser mit Schneidplatten;
Fig. 5 eine weitere Variante eines Ladewagenmessers mit Schneidplatten in Draufsicht;
Fig. 6 das Ladewagenmesser aus Fig. 5 in einer stirnseitigen Ansicht;
Fig. 7 das Ladewagenmesser aus Fig. 5 und Fig. 6 in einer Ansicht von unten;
Fig. 8 einen Schnitt entlang der Linie VIII-VIII in Fig. 7;
Fig. 9 eine vergrößerte Darstellung zu einem Schleifwinkel;
Fig. 10 eine perspektivische Darstellung eines Ladewagenmessers mit befestigten Schneidplatten im ungeschliffenen Zustand;
Fig. 11 eine perspektivische Darstellung eines Ladewagenmessers mit Schneidplatten im geschliffenen Zustand.

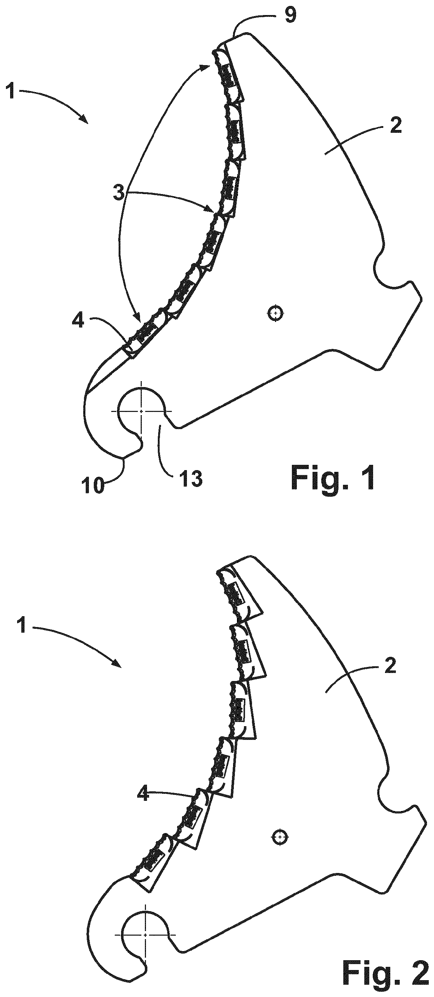

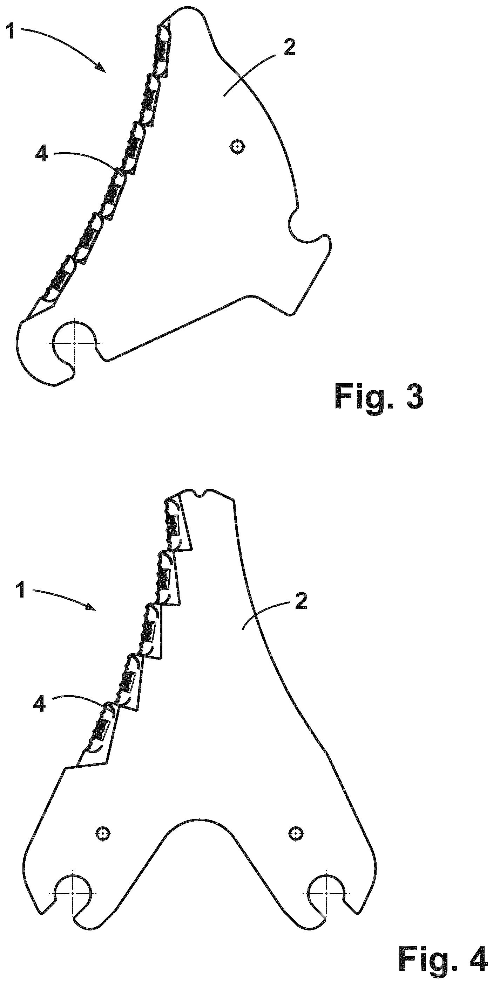

In Fig. 1 bis Fig. 4 sind verschiedene Messer 1 dargestellt, die unterschiedliche geometrische Form sowie Bestückungen mit Schneidplatten 4 aufweisen. Die nachfolgenden Erläuterungen zur Ausführungsvariante gemäß Fig. 1 treffen analog auf die Ausführungen gemäß den Fig. 2 bis Fig. 4 zu. Bei den Messern 1 gemäß Fig. 1 bis Fig. 3 handelt es sich um Ladewagenmesser. Fig. 4 zeigt ein Messer 1 in Form eines Pressenmessers.

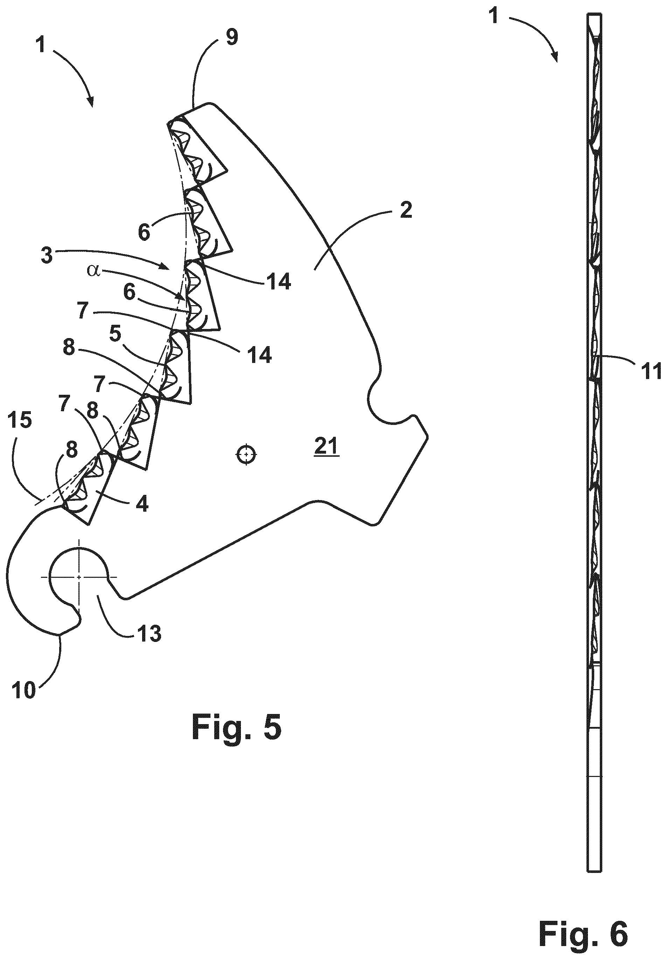

Das Messer 1 gemäß Fig. 1 umfasst einen Grundkörper 2, der im Wesentlichen flach ausgebildet ist. Der Grundkörper 2 weist eine Aufnahme 13 auf, welche dazu dient, den Grundkörper 2 an einem geeigneten Werkzeugträger zu befestigen, sodass der Grundkörper 2 gegenüber einem das zu schneidende Gut vorwärtsbewegenden Rotor angestellt werden kann. Um Schnittgut wie Heu schneiden zu können, weist das Messer 1 einen Schneidbereich 3 auf. Durch Vorwärtstreiben des zu schneidenden Gutes mit dem Rotor trifft das Schnittgut auf den Schneidbereich 3 und wird in diesem Bereich geschnitten. Im Schneidbereich 3 sind die Schneidplatten 4 angeordnet. Die Schneidplatten 4 bilden in allen Ausführungsvarianten eine durchgehende Linie, sodass der Schneidbereich 3 zumindest im Wesentlichen vollständig von den Schneidplatten 4 abgedeckt ist. Die Schneidplatten 4 verlaufen dabei von einer Innenseite 10 des Grundkörpers, benachbart zur Aufnahme 13, zu einer Außenseite 9 des Grundkörpers 2. Da der Schneidbereich 3 gebogen ausgebildet ist, bildet auch die Anordnung der Schneidplatten 4 einen entsprechenden Bogen, wobei die Schneidplatten 4 jedoch in bestimmter Weise angeordnet sind, wie dies anhand eines weiteren Messers 1 gemäß Fig. 5 bis Fig. 11 im Detail exemplarisch erläutert wird.

Das Messer 1 gemäß Fig. 5 weist wiederum einen Grundkörper 2 mit einer Vielzahl an Schneidplatten 4 auf, die im Schneidbereich 3 angeordnet sind. Die Schneidplatten 4 bilden dabei in stirnseitiger Ansicht (Fig. 6) mit deren Schneidkanten 6 eine durchgehende Schneidlinie 11, sind also ohne Abstand so angeordnet, dass zu schneidendes Gut im Schneidbereich 3 nur auf die Schneidplatten 4, nicht jedoch auf den Grundkörper 2 treffen kann.

Die Schneidplatten 4 sind allgemein mit einer Stirnseite 5 ausgebildet, welche eine Schneidkante 6 definiert. Der Stirnseite 5 einer Schneidplatte 4 liegt eine Rückseite gegenüber. Die Stirnseite 5 ist mit der Rückseite über Breitseiten verbunden, sodass sich eine ungefähr rechteckige Form für die Schneidplatten 4 ergibt. Die einzelnen Schneidplatten 4 sind in Plattensitzen 14 stoffschlüssig durch Löten befestigt. Die Plattensitze 14 können im Grundkörper 2 durch Fräsen eingearbeitet werden. Dabei nimmt jeder Plattensitz 14 eine einzelne Schneidplatte 4 formschlüssig auf. Bevorzugt ist vorgesehen, dass die Schneidplatte 4 an den Breitseiten sowie teilweise oder vollständig an der Rückseite in einem Plattensitz 14 zur Anlage kommt. Dadurch ist die Schneidplatte 4 einerseits beim Löten ausgerichtet und andererseits im Einsatz stabil gehalten.

Im Bereich der Stirnseite 5 weist eine Schneidplatte 4 eine erste Ecke 7 und eine zweite Ecke 8 auf. Die erste Ecke 7 und die zweite Ecke 8 ergeben sich dort, wo die Stirnseite 5 in die Breitseiten übergeht.

Die Anordnung der Schneidplatten 4 ist von der Innenseite 10 zur Außenseite 9 hin so getroffen, dass die zweiten Ecken 8 hinter einer Verbindungslinie 15 liegen, welche durch Verbinden der ersten Ecken 7 der Schneidplatten 4 gebildet ist. Bei der Ausführungsvariante gemäß Fig. 5 liegen die ersten Ecken 7 auf einem Kreisbogen mit einem vorgegebenen Radius. Dies ist auch bei den Ausführungsvarianten gemäß Fig. 1 bis Fig. 4 der Fall, wenngleich die Verbindungslinie 15 nicht zwingend ein Kreisbogen sein muss. Die Gestalt der Verbindungslinie 15 kann von einem Kreisbogen abweichen, wenn der Grundkörper 2 eine andere Form aufweist.

Mit Blick auf Fig. 5 kann gesagt werden, dass die Schneidplatten 4 in Relation zur Verbindungslinie 15 verdreht sind, indem um eine durch die erste Ecke 7 laufende Drehachse eine Verdrehung der zweiten Ecke 8 erfolgt. Ein entsprechender Winkel α kann bis zu 15° betragen, beispielsweise 2° bis 8°. Dies führt auch dazu, dass von der Innenseite 10 zur Außenseite 9 hin entlang der Schneidplatten 4 von einer Schneidplatte 4 zur nächsten ein Rücksprung in der Schneidlinie 11 gegeben ist. Dadurch kann ein besonders effizienter Schnitt erreicht werden, weil das Schnittgut weniger leicht nach außen hin bzw. zur Außenseite 9 ausweichen kann.

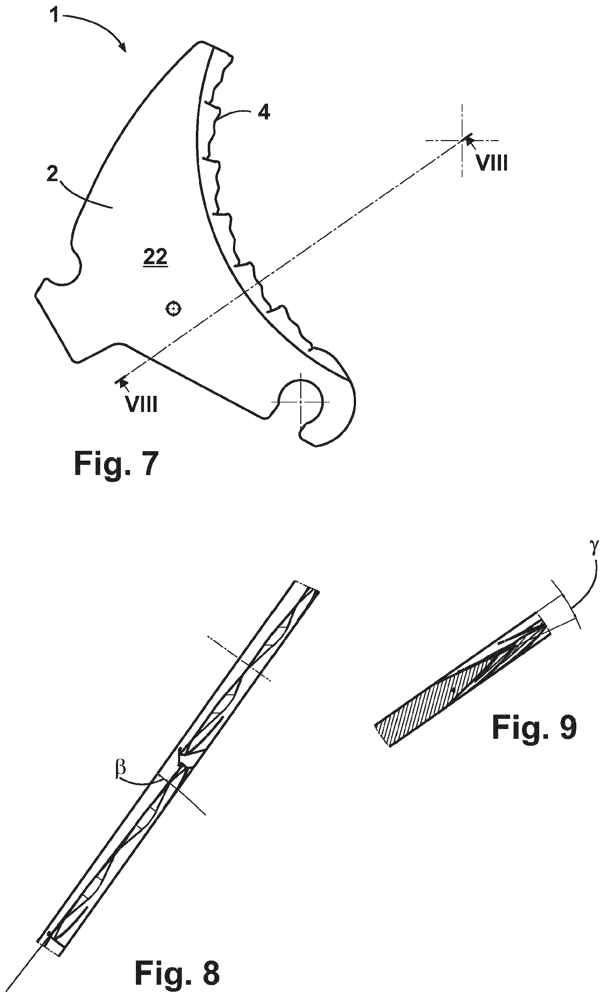

Die Schneidplatten 4 sind nicht nur in Bezug auf eine Oberseite 21 verdreht, sondern auch in der Ebene des Grundkörpers 2, der flächig ausgebildet ist. Dies ist in der vergrößerten Darstellung in Fig. 6 sowie auch in Fig. 8 ersichtlich. Relativ zu einer gedanklichen Ebene, welche durch den flächig ausgebildeten Grundkörper 2 verläuft, sind die ersten Ecken 7 höher angeordnet als die zweiten Ecken 8. Ein entsprechender Winkel β einer Schrägstellung der Schneidplatten kann bis zu 25° betragen. Üblicherweise liegt der entsprechende Winkel β im Bereich von 7,5° bis 12,5°. Durch diese Schrägstellung relativ zu der erwähnten gedanklichen Ebene wird es möglich, dass die Schneidplatten an der Unterseite 22 angeschliffen werden können, sodass eine optimale Schneidleistung erreichbar ist. Ein Schleifwinkel γ kann 5° bis 25° betragen. Üblicherweise liegt der Schneidwinkel etwa im Bereich von 8° bis 12°. In Fig. 9 beträgt der Schleifwinkel γ beispielsweise 10°.

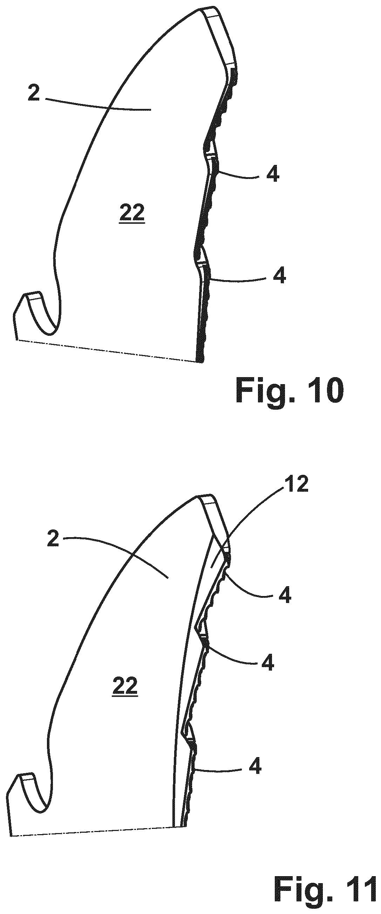

Wäre die Schneidplatte 4 relativ zur gedanklichen Ebene, welche durch den Grundkörper 2 verläuft, nicht verdreht angeordnet, würden bei einem Schleifen an der Unterseite 22 merkliche Teile einer Schneidplatte 4 im Bereich der ersten Ecken 7 abgeschliffen werden. Durch die Schrägstellung relativ zur gedanklichen Ebene wird letztlich die in Draufsicht gegebene Verdrehung so ausgeglichen, dass entlang der gesamten Stirnseite 5 ein etwa gleichmäßiger Schleifprozess durchgeführt werden kann. Dies ist anhand von Fig. 10 sowie Fig. 11 ersichtlich. Fig. 10 zeigt die Unterseite 22 des Grundkörpers 2 mit befestigten Schneidplatten 4, welche in den Plattensitzen 14 befestigt sind und geringfügig vorstehen. Dies entspricht einem Zustand, indem die Schneidplatten 4 am Grundkörper 2 bereits angelötet sind, aber das Messer 1 noch nicht einsatzbereit ist, weil die Schneidplatten 4 noch nicht geschliffen sind. Ein Zustand nach dem Anschleifen ist in Fig. 11 dargestellt. Wie ersichtlich ist, wird bei einem Schleifprozess auch ein Teil an der Unterseite 22 des Grundkörpers 2 mitabgeschliffen, sodass sich am Grundkörper 2 eine Schräge 12 ergibt. Wie in Fig. 11 ersichtlich ist, ergibt sich bei dem gewählten Schleifwinkel γ von 10° für alle Schneidplatten 4 ein gleichmäßiger Überstand über die Plattensitze 14 hinaus, wenn die Schneidplatten 4 geschliffen sind. Durch die gedrehte Anordnung der Schneidplatten 4 durch gedankliche Drehung normal zum flachen Grundkörper 2 um die ersten Ecken 7 einerseits sowie eine Drehung der Schneidplatten 4 um eine parallel zur gedanklichen Ebene durch den Grundkörper 2 verlaufenden Drehachse andererseits kann somit bei hoher Standzeit und guter Schnittwirkung auch ein optimales Schleifen erfolgen.

## Patentansprüche

1. Messer (1) für Maschinen für die Landwirtschaft, beispielsweise Erntemaschinen, insbesondere ein Pressenmesser oder Ladewagenmesser, umfassend einen im Wesentlichen flach ausgebildeten Grundkörper (2) mit einem insbesondere gebogenen Schneidbereich (3), in dem bei feststehendem Grundkörper (2) ein Schnitt von Heu oder dergleichen erfolgt, wobei im Schneidbereich (3) Schneidplatten (4) aus einem Hartmetall angeordnet sind, wobei die Schneidplatten (4) an einer Stirnseite (5) mit Schneidkanten (6) und mit einer ersten Ecke (7) und einer zweiten Ecke (8) ausgebildet sind, wobei die Schneidplatten (4) in Draufsicht auf eine Oberseite (21) des Grundkörpers (2) so angeordnet sind, dass die zweite Ecke (8) einer Schneidplatte (4) hinter einer Verbindungslinie (15) der ersten Ecken (7) der Schneidplatten (4) liegt, **dadurch gekennzeichnet, dass** die Schneidplatten (4) in stirnseitiger Ansicht auf die Schneidkanten (6) schräg angeordnet sind, wobei die erste Ecke (7) einer Schneidplatte (4) höher als die zweite Ecke (8) dieser Schneidplatte (4) liegt.

2. Messer (1) nach Anspruch 1, **dadurch gekennzeichnet, dass** die ersten Ecken (7) auf einem Kreisbogen angeordnet sind.

3. Messer (1) nach Anspruch 1 oder 2, **dadurch gekennzeichnet, dass** die Schneidplatten (4) in Draufsicht auf die Oberseite (21) des Grundkörpers (2) um einen Winkel (α) von bis zu 15°, beispielsweise mehr als 0° bis 10°, vorzugsweise 1° bis 9°, insbesondere 2° bis 8°, relativ zur Verbindungslinie (15) verdreht sind.

4. Messer (1) nach einem der Ansprüche 1 bis 3, **dadurch gekennzeichnet, dass** die Schneidplatten (4) derart angeordnet sind, dass die ersten Ecken (7) näher zu einer Außenseite (9) des Grundkörpers (2) und die zweiten Ecken (8) näher zu einer Innenseite (10) des Grundkörpers (2) liegen.

5. Messer (1) nach Anspruch 1, **dadurch gekennzeichnet, dass** ein Winkel (β) einer Schrägstellung der Schneidplatten (4) bis zu 25° beträgt, vorzugsweise bis zu 17,5°, insbesondere bis zu 15°, beispielsweise 7,5° bis 12,5°.

6. Messer (1) nach einem der Ansprüche 1 bis 5, **dadurch gekennzeichnet, dass** die Schneidplatten (4) in stirnseitiger Ansicht eine zumindest im Wesentlichen durchgehende Schneidline (11) bilden.

7. Messer (1) nach einem der Ansprüche 1 bis 6, **dadurch gekennzeichnet, dass** der Grundkörper (2) aus einem Stahl gebildet ist.

8. Messer (1) nach einem der Ansprüche 1 bis 7, **dadurch gekennzeichnet, dass** der Grundkörper (2) mit Plattensitzen (14) ausgebildet ist, in welchen die Schneidplatten (4) angeordnet sind.

9. Messer (1) nach einem der Ansprüche 1 bis 8, **dadurch gekennzeichnet, dass** die Schneidplatten (4) am Grundkörper (2) angelötet sind.

10. Messer (1) nach einem der Ansprüche 1 bis 9, **dadurch gekennzeichnet, dass** die Schneidplatten (4) an einer Unterseite (12) geschliffen sind.

11. Messer (1) nach Anspruch 10, **dadurch gekennzeichnet, dass** ein Schleifwinkel (γ) 5° bis 25°, vorzugsweise 7,5° bis 20°, insbesondere 8° bis 18°, beträgt.

## Claims

1. A blade (1) for agricultural machinery, for example harvesters, in particular a press blade or loading truck blade, comprising a base body (2) essentially flat in design with an in particular curved cutting area (3), in which hay or the like is cut with the base body (2) fixed in place, wherein cutting inserts (4) made out of a hard metal are arranged in the cutting area (3), wherein the cutting inserts (4) are designed on one front side (5) with cutting edges (6) and with a first corner (7) and a second corner (8), wherein the cutting inserts (4) as viewed from the top are arranged on an upper side (21) of the base body (2) in such a way that the second corner (8) of one cutting insert (4) lies behind a connecting line (15) of the first corners (7) of the cutting inserts (4), **characterized in that** the cutting inserts (4) as viewed from the front are arranged at an inclination on the cutting edges (6), wherein the first corner (7) of a cutting insert (4) lies higher than the second corner (8) of this cutting insert (4).

2. The blade (1) according to claim 1, **characterized in that** the first corners (7) are arranged on a circular arc.

3. The blade (1) according to claim 1 or 2, **characterized in that** the cutting inserts (4) as viewed from the top are twisted on the upper side (21) of the base body (2) by an angle (α) of up to 15°, for example more than 0° to 10°, preferably 1° to 9°, in particular 2° to 8°, relative to the connecting line (15).

4. The blade (1) according to one of claims 1 to 3, **characterized in that** the cutting inserts (4) are arranged in such a way that the corners (7) lie closer to one exterior side (9) of the base body (2), and the second corners (8) lie closer to an interior side (10) of the base body (2).

5. The blade (1) according to claim 1, **characterized in that** an angle (β) of an inclined position of the cutting inserts (4) measures up to 25°, preferably up to 17.5°, in particular up to 15°, for example 7.5° to 12.5°.

6. The blade (1) according to one of claims 1 to 5, **characterized in that** the cutting insets (4) as viewed from the front form an at least essentially continuous cutting line (11).

7. The blade (1) according to one of claims 1 to 6, **characterized in that** the base body (2) consists of a steel.

8. The blade (1) according to one of claims 1 to 7, **characterized in that** the base body (2) is designed with insert seats (14), in which the cutting inserts (4) are arranged.

9. The blade (1) according to one of claims 1 to 8, **characterized in that** the cutting inserts (4) are soldered to the base body (2).

10. The blade (1) according to one of claims 1 to 9, **characterized in that** the cutting inserts (4) are ground on a lower side (12).

11. The blade (1) according to claim 10, **characterized in that** a grinding angle (γ) measures 5° to 25°, preferably 7.5 to 20°, in particular 8° to 18°.

## Revendications

1. Lame (1), destinée à des machines à vocation agricole, par exemple à des machine de récolte, notamment une lame de presse ou une lame de remorque auto-chargeuse, comprenant un corps de base (2) conçu sous une forme sensiblement plate, doté d'une zone de coupe (3) notamment incurvée, dans laquelle, lorsque le corps de base (2) est stationnaire s'effectue une coupe de foin ou analogue, dans la zone de coupe (3) étant placées des plaquettes de coupe (4) en un métal dur, les plaquettes de coupe (4) étant conçues sur une face frontale (5) avec des arêtes de coupe (6) et avec un premier coin (7) et un deuxième coin (8), vues en élévation, les plaquettes de coupe (4) étant placées sur une face supérieure (21) du corps de base (2), de telle sorte que le deuxième coin (8) d'une plaquette de coupe (4) se situe derrière une ligne d'assemblage (15) des premiers coins (7) des plaquettes de coupe (4), **caractérisée en ce que**, en vue frontale sur les arêtes de coupe (6), les plaquettes de coupe (4) sont placées en oblique, le premier coin (7) d'une plaquette de coupe (4) se situant plus haut que le deuxième coin (8) de ladite plaquette de coupe (4).

2. Lame (1) selon la revendication 1, **caractérisée en ce que** les premiers coins (7) sont placés sur un arc de cercle.

3. Lame (1) selon la revendication 1 ou 2, **caractérisée en ce qu'**en vue en élévation sur la face supérieure (21) du corps de base (2), les plaquettes de coupe (4) sont tournées de la valeur d'un angle (α) de jusqu'à 15 °, par exemple de plus de 0 ° à 10 °, de préférence de 1 ° à 9 °, notamment de 2 ° à 8 ° par rapport à la ligne d'assemblage (15).

4. Lame (1) selon l'une quelconque des revendications 1 à 3, **caractérisée en ce que** les plaquettes de coupe (4) sont placées de telle sorte que les premiers coins (7) se situent plus près d'une face extérieure (9) du corps de base (2) et les deuxièmes coins (8) se situent plus près d'une face intérieure (10) du corps de base (2).

5. Lame (1) selon la revendication 1, **caractérisée en ce qu'**un angle (β) d'une position inclinée des plaquettes de coupe (4) s'élève à jusqu'à 25 °, de préférence, à jusqu'à 17,5 °, notamment à jusqu'à 15 °, par exemple à de 7,5 ° à 12,5 °.

6. Lame (1) selon l'une quelconque des revendications 1 à 5, **caractérisée en ce que**, en vue frontale, les plaquettes de coupe (4) constituent une ligne de coupe (11) sensiblement continue.

7. Lame (1) selon l'une quelconque des revendications 1 à 6, **caractérisée en ce que** le corps de base (2) est constitué en un acier.

8. Lame (1) selon l'une quelconque des revendications 1 à 7, **caractérisée en ce que** le corps de base (2) est conçu avec des logements de plaquettes (14) dans lesquels sont placées les plaquettes de coupe (4).

9. Lame (1) selon l'une quelconque des revendications 1 à 8, **caractérisée en ce que** les plaquettes de coupe (4) sont fixées par brasage sur le corps de base (2).

10. Lame (1) selon l'une quelconque des revendications 1 à 9, **caractérisée en ce que** les plaquettes de coupe (4) sont rectifiées sur une face inférieure (12).

11. Lame (1) selon la revendication 10, **caractérisée en ce qu'**un angle de rectification (γ) s'élève à de 5 ° à 25
°, de préférence à de 7,5 ° à 20 °, notamment à de 8 ° à 18 °.
